(19) Europäisches Patentamt / European Patent Office / Office européen des brevets

(11) **EP 2 067 727 B1**

(12) **FASCICULE DE BREVET EUROPEEN**

(45) Date de publication et mention
de la délivrance du brevet:
**09.03.2011 Bulletin 2011/10**

(51) Int Cl.:
**B65H 51/20** *(2006.01)*    **B65H 59/00** *(2006.01)*
**B29D 30/16** *(2006.01)*    **B65H 51/30** *(2006.01)*

(21) Numéro de dépôt: **08170864.6**

(22) Date de dépôt: **05.12.2008**

(54) **Dispositif de régulation d'un débit de défilement d'un élément linéaire**

Vorrichtung zum Regulieren des Durchsatzes eines linearen Elements

Device for adjusting the travelling rate of a linear element

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **07.12.2007 FR 0759654**

(43) Date de publication de la demande:
**10.06.2009 Bulletin 2009/24**

(73) Titulaires:
• **Société de Technologie MICHELIN**
**63000 Clermont-Ferrand (FR)**
• **MICHELIN Recherche et Technique S.A.**
**1763 Granges-Paccot (CH)**

(72) Inventeurs:
• **Hinc, Henri**
**63540 Romagnat (FR)**
• **Leblanc, Dominique**
**63200 Mozac (FR)**

(74) Mandataire: **Reynaud, Georges et al**
**Manufacture Française**
**des Pneumatiques Michelin**
**23, place des Carmes-Dechaux**
**SGD/LG/PI-F35-Ladoux**
**63040 Clermont-Ferrand Cedex 9 (FR)**

(56) Documents cités:
WO-A-97/48548    WO-A-2007/045684
DE-A1- 3 939 595    DE-C- 906 065
GB-A- 2 327 393    JP-A- 11 198 247
US-A- 3 721 599

**Description**

La présente invention concerne la fabrication d'un pneumatique renforcé par une nappe carcasse radiale.

JP-111 98 247 décrit un dispositif de régulation d'un débit de défilement d'un élément linéaire pour la fabrication d'un pneumatique.

On connaît une installation de fabrication d'un pneumatique renforcé, dans lequel la nappe carcasse est formée à partir d'un unique fil continu déposé radialement et alternativement entre deux tringles d'une ébauche de pneumatique.

Le fil, préalablement stocké autour d'une bobine, est déposé sur l'ébauche au moyen d'un organe de dépose comprenant une tête qui est déplacée alternativement selon une trajectoire sensiblement circulaire autour de l'ébauche. Le terme fil doit être compris dans un sens tout à fait général, englobant tout élément linéaire, notamment un mono-filament, un multi-filament, un câblé, un retors ou un assemblage équivalent, et ceci, quelle que soit la matière constituant le fil ou le traitement qu'il pourrait subir, par exemple un traitement de surface pour favoriser sa liaison intime avec du caoutchouc, voire encore un traitement de gommage entourant ledit fil d'une couche de caoutchouc pour permettre son adhésion directe sur l'ébauche de pneumatique.

Le procédé connu utilise une bobine fixe. Le fil se dévide de la bobine sous l'effet de la tension exercée par le fil, en fonction des besoins en fil de l'organe de dépose. Pour éviter que le fil ne se dévide trop vite de la bobine, ce qui aurait pour inconvénient de diminuer la tension de pose du fil, on utilise des organes de frottement sur le fil qui s'opposent au dévidage du fil de la bobine.

Or, le fil est généralement enrobé dans une couche de colle si bien que les organes de frottement provoquent l'arrachement de cette couche de colle qui risque d'encrasser l'installation.

Une solution à ce problème pourrait consister à utiliser une bobine mobile dont la rotation serait contrôlée pour dérouler une quantité de fil nécessaire à l'alimentation de l'organe de dépose. Cela permettrait alors de se dispenser de l'utilisation d'organes de frottement. Cependant, du fait du mouvement de dépose alternatif et de la forme de l'ébauche, le débit de fil requis pour alimenter l'organe de dépose est variable. Le pilotage de la rotation de la bobine serait alors particulièrement compliqué.

L'invention a notamment pour but de s'affranchir de ces inconvénients.

A cet effet, l'invention a pour objet un dispositif de régulation d'un débit de défilement d'un élément linéaire pour la fabrication d'un pneumatique, comprenant des moyens formant un trajet de défilement de l'élément linéaire entre une entrée du dispositif à débit sensiblement constant et une sortie du dispositif à débit variable et sensiblement périodique, le trajet ayant une longueur variable selon une loi périodique prédéterminée, ces moyens comprenant :

- une pluralité de poulies de renvoi de l'élément linéaire, chacune mobile en translation rectiligne selon une même direction,
- des moyens de déplacement des poulies agencés pour les déplacer selon un mouvement de translation sinusoïdal de période multiple de la période du débit de sortie de l'élément linéaire, la période du mouvement d'au moins une poulie dite menante étant égale à la période du débit de sortie de l'élément linéaire,
- des moyens de couplage des mouvements des poulies agencés de sorte que la fréquence du mouvement de chaque poulie est un multiple entier de la fréquence du mouvement de la poulie menante,
- pour chaque poulie, des moyens de réglage de son amplitude de translation.

En d'autres termes, le dispositif de régulation d'un débit de défilement d'un élément linéaire, comprend des moyens formant un trajet de défilement de l'élément linéaire entre une entrée du dispositif à débit sensiblement constant et une sortie du dispositif à débit variable et sensiblement périodique, et des moyens pour faire varier la longueur du trajet de l'élément linéaire conformément à une loi périodique prédéterminée.

Par élément linéaire, on entend tout élément s'étendant selon une direction principale, comme par exemple un fil, une bande ou un ruban.

Grâce au dispositif de l'invention, on peut utiliser une bobine de fil se déroulant à vitesse constante pour alimenter selon un débit variable et sensiblement périodique un organe de dépose du fil sur une ébauche de pneumatique. On intercale pour cela le dispositif de l'invention entre la bobine et l'organe de dépose.

Pour déterminer la loi périodique, on utilise le fait que la vitesse variable peut être facilement calculée en fonction de la fréquence de pose du fil et de la forme de l'ébauche. La vitesse constante utilisée pour piloter la rotation de la bobine correspond quant à elle à la moyenne de la vitesse variable.

En faisant varier la longueur du trajet de l'élément linéaire dans le dispositif, on est assuré que le fil est en permanence tendu lors de la pose du fil sur l'ébauche, sans qu'il soit nécessaire d'utiliser un organe de frottement.

Un dispositif selon l'invention peut également comprendre l'une ou plusieurs des caractéristiques suivantes.

- Les moyens formant le trajet pour l'élément linéaire comprennent au moins une poulie mobile de renvoi de l'élément linéaire. La poulie permet de guider l'élément linéaire à l'intérieur du dispositif et ainsi d'imposer son trajet.

- Les moyens pour faire varier la longueur du trajet comprennent des moyens de déplacement de la poulie suivant un mouvement périodique. En déplaçant la poulie, on modifie le guidage de l'élément linéaire ce qui permet de modifier notamment la longueur du trajet de l'élément dans le dispositif.

- Le mouvement périodique de déplacement des poulies est déterminé de manière à compenser les variations du débit de sortie du dispositif. Etant donné que les débits d'entrée et de sortie de l'élément linéaire sont parfaitement connus, il est possible de paramétrer le mouvement de déplacement de la poulie pour compenser les variations de débits.

- Les moyens de déplacement de chaque poulie comprennent :

    o un coulisseau formant support de la poulie, mobile en translation,
    o un arbre d'entraînement du coulisseau, et
    o des moyens de couplage du coulisseau avec l'arbre transformant le mouvement de rotation de l'arbre en mouvement périodique de translation du coulisseau.

    Il est avantageux que la poulie se déplace selon une translation car ce mouvement est simple à reproduire et à paramétrer.

- Les moyens de couplage sont de type bielle/manivelle, came/suiveur de came ou manivelle à coulisse. Ces différents types de couplage permettent de transformer le mouvement de rotation de l'arbre en mouvement de translation du coulisseau.

- Les moyens de couplage étant du type manivelle à coulisse, ils comprennent :

    o un galet d'entraînement formant manivelle, porté par l'une des extrémités de l'arbre et déporté radialement d'un axe principal de l'arbre,
    o une rainure formant coulisse ménagée dans le coulisseau et orientée sensiblement orthogonalement à la direction de translation du coulisseau et dans laquelle est engagé le galet,

    de sorte que lorsque l'arbre tourne à vitesse constante, le déplacement du coulisseau est sinusoïdal. Il est avantageux d'utiliser des moyens de couplage de type manivelle à coulisse car ces moyens permettent d'obtenir un mouvement sinusoïdal du coulisseau.
    Or, un mouvement sinusoïdal est un mouvement élémentaire particulièrement intéressant
    car il peut être utilisé lors d'une décomposition en série de Fourier d'un mouvement périodique.

- Le dispositif comprend des moyens pour modifier le déport radial du galet formant moyens de réglage de l'amplitude de translation de la poulie, de manière à régler l'amplitude de translation du coulisseau.

- Le dispositif comprend une pluralité de poulies, de préférence trois poulies, dont les arbres d'entraînement respectifs des poulies sont couplés les uns avec les autres de sorte

    que l'arbre de la poulie menante est menant et les arbres des poulies sont couplés deux à deux par des moyens de démultiplication en se référant à l'arbre menant.

- Les vitesses de rotation des arbres sont distinctes les unes des autres et sont des multiples de la vitesse de l'arbre menant. Ainsi, il est possible que les vitesses de rotation des arbres soient des harmoniques d'une vitesse d'un arbre menant.

- La période de rotation de l'arbre menant est sensiblement égale à la période du débit variable et sensiblement périodique. Ainsi, la période de déplacement de la poulie liée à l'arbre menant correspond à la période fondamentale du débit de sortie de l'élément linéaire et les périodes des autres arbres correspondent à des harmoniques de ce débit.

L'invention a également pour objet une installation de dépose radiale d'un élément linéaire sur une ébauche de pneumatique, comprenant un dispositif de régulation tel que précédemment défini.

Une installation selon l'invention peut en outre comprendre l'une ou plusieurs des caractéristique suivantes.

- L'installation comprend :

    o une bobine formant support d'enroulement pour l'élément linéaire,
    o un organe de dépose de l'élément linéaire sur l'ébauche au débit variable et sensiblement périodique, comprenant une tête de dépose et des moyens de déplacement de la tête,
    o des moyens pour dérouler l'élément linéaire de la bobine en le faisant défiler au débit sensiblement constant, et
    o le dispositif de régulation de débit, intercalé entre la bobine et l'organe de dépose.

- L'installation comprend des moyens de couplage des moyens de déplacement de la tête avec les moyens pour faire varier la longueur du trajet de l'élément linéaire.
- L'installation comprend des moyens de couplage des moyens de déplacement de la tête avec les moyens pour dérouler l'élément linéaire.

L'invention a également pour objet un procédé de réglage d'un dispositif tel que précédemment défini, pour réguler le débit de défilement d'un élément linéaire défilant à un débit variable et sensiblement périodique, comprenant les étapes suivantes :

- décomposition en série de Fourier d'ordre n du débit de défilement périodique de l'élément linéaire, pour déterminer les coefficients de Fourier des n premières harmoniques,
- utilisation d'un dispositif comprenant n poulies de renvoi,
- réglage des amplitudes de translation des poulies de renvoi de sorte que, pour une poulie dont la fréquence du mouvement est égale à m fois la fréquence du mouvement de la poulie menante, son amplitude de translation est réglée en fonction du $m^{iéme}$ coefficient de Fourier.

L'invention sera mieux comprise à la lecture de la description qui va suivre, donnée uniquement à titre d'exemple et faite en se référant aux dessins annexés dans lesquels :

- la figure 1 est une vue d'une installation de dépose selon l'invention,
- la figure 2 est un schéma illustrant la trajectoire suivie par le fil autour de l'ébauche du pneumatique lors de sa pose,
- les figures 3a et 3b sont des graphiques représentant respectivement l'évolution temporelle de la vitesse de pose du fil sur l'ébauche et de débit du fil en sortie de l'organe de pose,
- les figures 4 à 7 sont des vues de détail du dispositif de régulation de l'installation de la figure 1,
- la figure 8 est une vue selon une coupe horizontale du dispositif de régulation de l'invention,
- la figure 9 est une vue en coupe verticale du dispositif de régulation de l'invention.

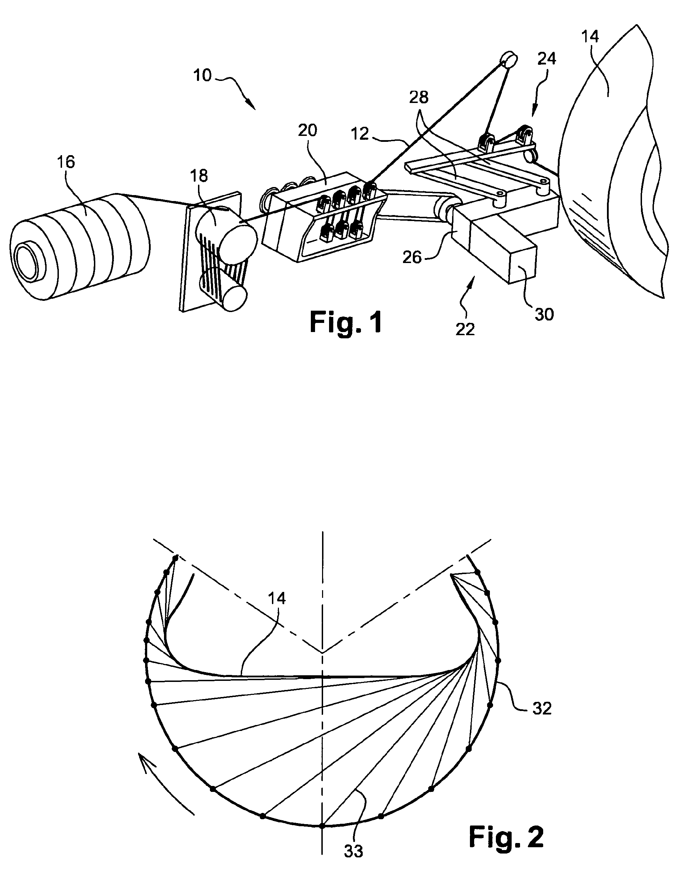

On a représenté sur la figure 1 une installation 10 selon l'invention pour la dépose radiale d'un fil 12 sur une ébauche 14 de pneumatique.

Le fil 12 est par exemple un fil métallique destiné à former la nappe de renfort carcasse de l'ébauche de pneumatique 14. Ce fil peut éventuellement être enrobé de caoutchouc de manière à améliorer son adhérence.

L'installation 10 comprend une bobine 16 d'enroulement du fil 12, des moyens 18 de tension du fil, de type cabestan, un dispositif 20 selon l'invention de régulation du débit de défilement du fil 12 et un organe 22 de dépose périodique du fil 12 sur l'ébauche 14.

La bobine 16 est destinée à être déroulée à une vitesse constante. A cet effet, le système comprend des moyens (non-représentés) de déroulement de la bobine à vitesse constante.

L'organe 22 comprend une tête de dépose 24 montée mobile par rapport à un châssis 26 de l'organe 22. La tête 24 est reliée au support 26 par l'intermédiaire de deux bras 28 agencés de sorte que la tête 24 est mobile selon une trajectoire circulaire autour de l'ébauche 24 de pneumatique.

L'organe 22 comprend en outre un moteur 30 destiné à animer la tête 24 d'un mouvement alternatif de demi-période T. L'ensemble du moteur 30 et des bras 28 forme des moyens de déplacement de la tête 24.

On a schématisé sur la figure 2 le contour de l'ébauche 14 dans un plan de coupe horizontal. Le contour de l'ébauche s'étend entre les deux renforts de la zone basse du pneumatique. La figure 2 présente également la trajectoire 32 suivie par la tête 24 au cours de son mouvement alternatif autour de l'ébauche 14. Comme précisé ci-dessus, la trajectoire 32 est sensiblement circulaire.

Les positions successivement occupées par la tête 24 au cours de son déplacement dans le sens des aiguilles d'une montre sont représentées par les points disposés sur la trajectoire 32. L'intervalle de temps séparant deux positions successives représentées sur la figure 2 est constant.

On a également représenté sur la figure 2 la portion 33 de fil 12 reliant la tête 24 à l'ébauche 14 à chaque instant.

Du fait de la forme particulière de l'ébauche 14, le débit du fil 12 en sortie de la tête 24 évolue au cours du temps. De même, la vitesse de dépose du fil 12 à la surface de l'ébauche 14 varie au cours du temps.

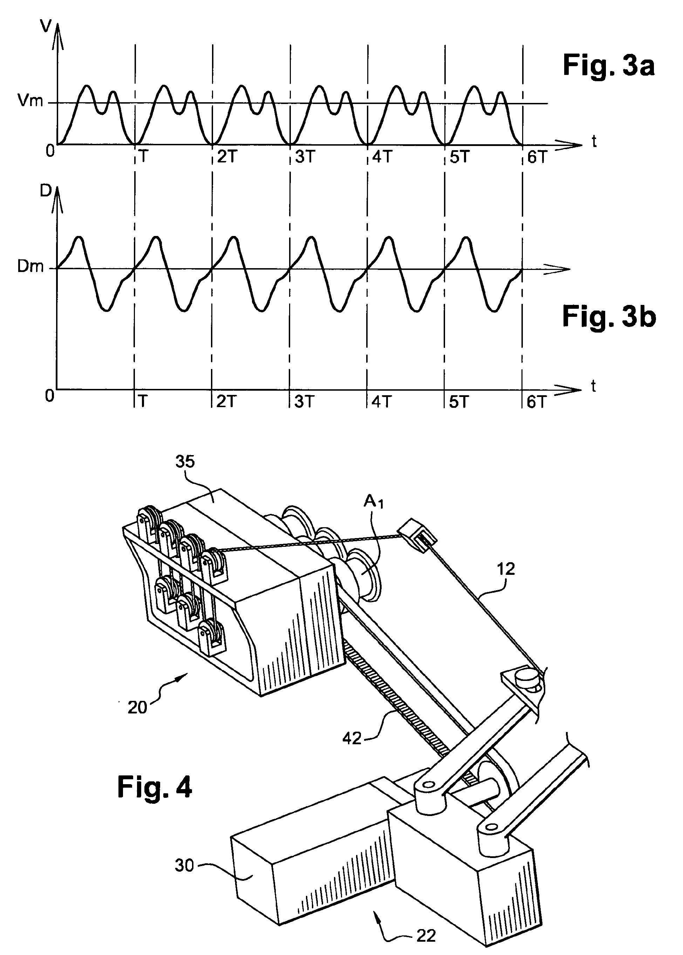

Le graphique de la figure 3a représente l'évolution de la vitesse instantanée V de dépose du fil à la surface de l'ébauche 14. On a également représenté sur ce graphique la vitesse moyenne Vm de dépose du fil. On constate que cette évolution est périodique de période T correspondant à la durée de dépose du fil d'un renfort de la zone basse de l'ébauche à l'autre. On constate également que le profil de la vitesse est le même selon que le fil 12 est déposé dans un sens ou dans l'autre. Cela est dû au fait que, dans le modèle représenté sur la figure 2, l'ébauche 14 est symétrique par rapport à un plan médian.

On constate qu'aux instants multiples de la période T, la vitesse de dépose du fil sur l'ébauche est nulle. En effet, à ces instants précis, la tête 24 de l'organe 22 est au niveau des tringles de l'ébauche 14 et change de direction. Sa vitesse est par conséquent nulle.

La figure 3b représente l'évolution au cours du temps du débit du fil 12 en sortie de la tête 24. Cette évolution est périodique de période T et oscille autour d'une valeur de débit moyen Dm. Cette valeur de débit moyen est bien entendu fonction de la période T et doit être égale au débit du fil en sortie de la bobine 16.

On constate donc que, en sortie de la bobine 16, le fil 12 défile à un premier débit Dm sensiblement constant et au niveau de la tête de dépose 24, le fil 12 défile à un second débit D variable et sensiblement périodique de période T.

Le dispositif 20 de régulation de l'invention a notamment pour but de gérer ces différences de débit. Ce dispositif 20 peut également être qualifié de dispositif de compensation des variations de débit.

Le dispositif 20 comprend un châssis 35 et une pluralité de poulies de renvoi 34 destinées à guider et former le trajet de défilement du fil 12 à l'intérieur du châssis 35. Certaines des poulies 34 sont mobiles de manière à former des moyens pour faire varier la longueur du trajet du fil 12 dans le châssis 35.

Le dispositif 20 comprend trois poulies mobiles P1, P2 et P3. Chaque poulie mobile est associée à des moyens de déplacement respectifs destinés à imposer aux poulies un mouvement prédéterminé. On ne décrira par la suite que les moyens de déplacement de la première poulie P1. Les moyens de déplacement des autres poulies sont identiques. Pour les besoins de la compréhension de ce qui suit, on utilisera un repère orthonormé dans lequel, l'axe des poulies P1, P2 et P3 est orienté selon la direction Y.

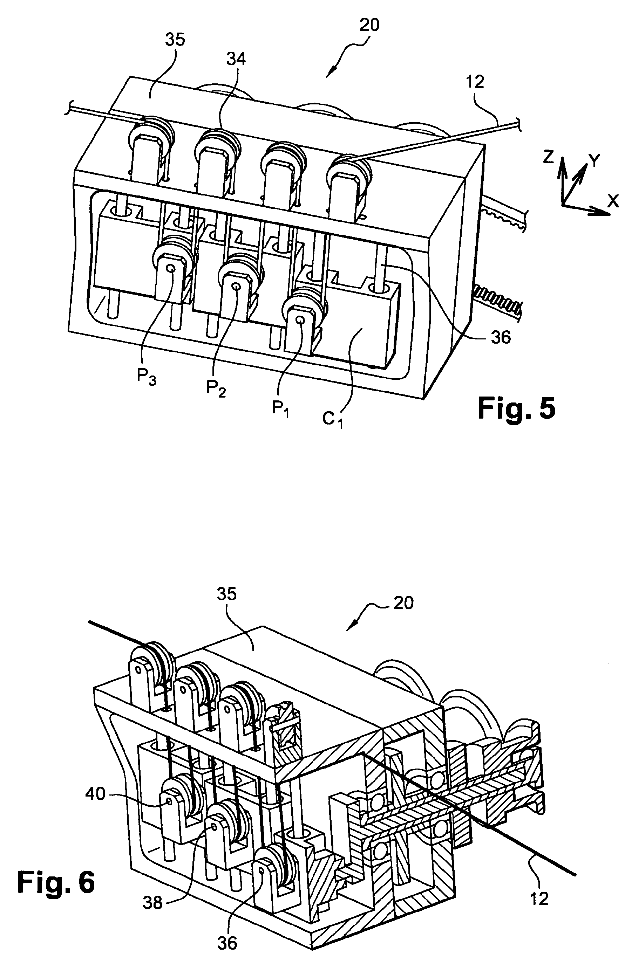

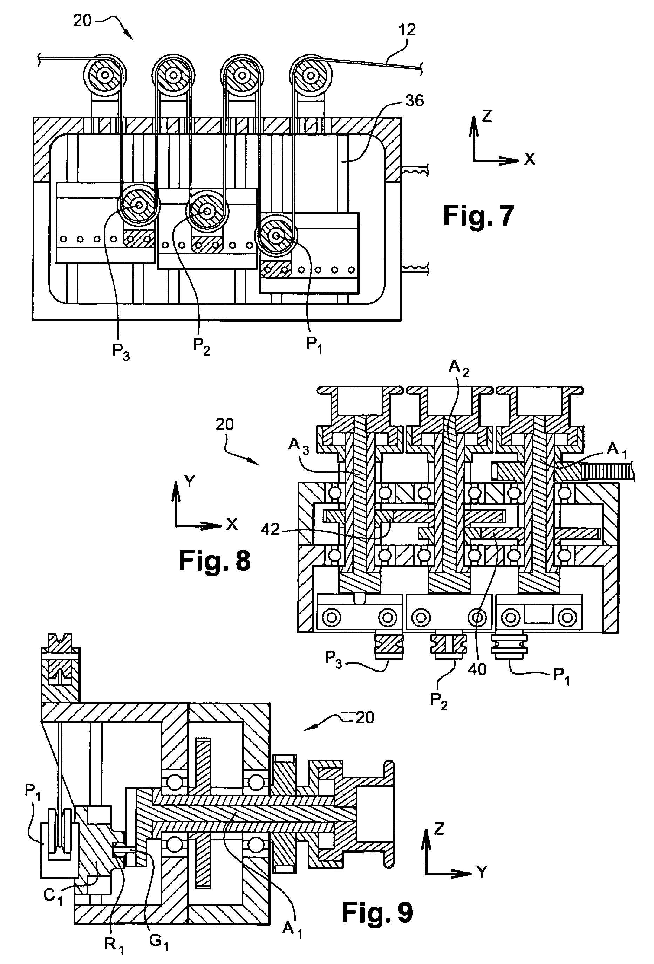

Les moyens de déplacement de la poulie P1 comprennent un coulisseau C1 formant support de la poulie et mobile en translation par rapport au châssis 35 selon une direction correspondant sensiblement à la direction Z dudit repère. A cet effet, et comme représenté sur les figures 5 et 7, le châssis 35 comprend des rails 36 de guidage du coulisseau C1 destinés à pénétrer dans des orifices ménagés dans le coulisseau C1. La poulie P1 est mobile en rotation par rapport au coulisseau C1 autour d'un axe Y sensiblement horizontal et orthogonal à la direction Z du repère.

Les moyens de déplacement de la poulie P1 comprennent également un arbre A1 d'entraînement du coulisseau destiné à être entraîné en rotation autour de sa direction principale d'axe Y par rapport au châssis 35 du dispositif 20.

Enfin, les moyens de déplacement de la poulie P1 comprennent des moyens de couplage du coulisseau C1 à l'arbre A1. Ces moyens de couplage sont de type manivelle à coulisse et comprennent un galet d'entraînement G1 formant manivelle, porté par une extrémité de l'arbre A1 et déporté radialement de l'axe principal de l'arbre A1 ; et une rainure R1 formant coulisse, ménagée dans le coulisseau C1 et orientée sensiblement orthogonalement à la direction Z de translation du coulisseau, c'est-à-dire orientée selon la direction X. Le galet G1 est engagé dans la rainure R1.

Sous l'effet de la rotation de l'arbre A1 autour de la direction Y, le galet G1 coulisse dans la rainure R1 et anime le coulisseau C1 d'un mouvement périodique de translation selon la direction Z. Ce mouvement de translation est sensiblement sinusoïdal lorsque l'arbre tourne à vitesse constante. La fréquence du mouvement est déterminée par la vitesse de rotation de l'arbre A1. L'amplitude de la translation du coulisseau C1 peut être réglée en modifiant le déport radial du galet G1 par rapport à l'axe principal de l'arbre A1.

Les directions principales des trois arbres A1, A2 et A3 sont sensiblement parallèles les unes aux autres, c'est-à-dire parallèles à la direction Y. De même, les directions de translation des coulisseaux C1, C2 et C3 sont sensiblement parallèles à la direction Z.

Par ailleurs, les arbres A1, A2 et A3 sont couplés en rotation les uns aux autres au moyen d'engrenages 40 et 42 visibles sur la figure 8 et intercalés respectivement entre les arbres A1 et A2, et les arbres A2 et A3. Les vitesses relatives des arbres A1, A2 et A3 l'un par rapport à l'autre peuvent être facilement réglées en fonction des rapports des engrenages qui forment ainsi des moyens de réduction ou de démultiplication.

On peut également régler le déphasage des arbres les uns par rapport aux autres de manière simple en agissant sur les engrenages.

Il ressort de la description précédente que l'on peut régler sur le dispositif 20 l'amplitude de déplacement de chaque coulisseau ainsi que leur fréquence et leur phase relatives. La manière de régler le dispositif 20 est décrite par la suite.

D'après le graphique de la figure 3, le débit du fil 12 au niveau de la tête de dépose 24, qui est équivalent au débit de sortie du fil du dispositif 20, est périodique de période T. On peut décomposer cette fonction en une série de Fourier d'ordre n. Dans l'exemple représenté, on se limite à l'ordre n = 3. Cette décomposition peut être calculée ou obtenue à l'aide d'un logiciel de transformée de Fourier rapide.

Notons H la transformée de Fourier de l'évolution temporelle du débit. La fonction H peut s'écrire de la manière suivante :

$$H = H0 + H1 + H2 + H3,$$

H0 est une constante et correspond à la valeur Dm du débit moyen du fil. Les autres termes sont exprimés sous la forme suivante :

$$H1 = a1.\sin\left[(2\pi \times 1 \times t/T) + \varphi 1\right]$$

$$H2 = a2.\sin\left[(2\pi \times 2 \times t/T) + \varphi 2\right]$$

$$H3 = a3.\sin\left[(2\pi \times 3 \times t/T) + \varphi 3\right]$$

Le rôle du dispositif 20 de régulation est de compenser les écarts du débit du fil 12 au niveau de la tête 24 par rapport au débit moyen Dm obtenu en sortie de la bobine 16. Il réalise donc une compensation par rapport aux fonctions H1, H2 et H3.

On note S la fonction de compensation du dispositif 20 de régulation. S est exprimée de la manière suivante :

$$S = S1 + S2 + S3,$$

avec

$$S1 = -H1 = a1.\sin\left[(2\pi \times 1 \times t/T) + \varphi 1 + \pi\right]$$

$$S2 = -H2 = a2.\sin\left[(2\pi \times 2 \times t/T) + \varphi 2 + \pi\right]$$

$$S3 = -H3 = a3.\sin\left[(2\pi \times 3 \times t/T) + \varphi 2 + \pi\right]$$

Il suffit ensuite de paramétrer le dispositif 20 de régulation de sorte que les valeurs respectives des amplitudes des coulisseaux C1, C2, C3 sont égales aux coefficients a1, a2 et a3, que les déphasages entre les différents coulisseaux sont respectivement égaux à $\varphi 1$, $\varphi 2$ et $\varphi 3$, et que les périodes de déplacement des coulisseaux C1, C2 et C3 sont respectivement égales à T, T/2 et T/3.

Pour que la période de déplacement du coulisseau C1 soit égale à la période T de déplacement de la tête 24 autour de l'ébauche 14, on relie le moteur 30 de l'organe 22 à l'arbre A1 au moyen d'une courroie 42 de liaison formant moyens de couplage des moyens de déplacement de la tête avec les moyens pour faire varier la longueur du trajet de l'élément linéaire.

Par ailleurs, on relie les moyens de déroulement de la bobine 16 au moteur 30 de l'organe 22 de manière à ce que la vitesse de déroulement du fil de la bobine soit sensiblement égale au débit moyen du fil en sortie de la tête 24.

On notera que le dispositif 20 de l'invention a simplement pour effet de maintenir constante la tension du fil 12 dans le système grâce aux variations de trajet du fil qu'il impose. La tension du fil 12 est déterminée grâce au cabestan 18. Le cabestan 18 est capable de fonctionner même lorsque le fil défile à grande vitesse car la vitesse du fil dans le cabestan est constante.

L'invention vient d'être décrite relativement à un dispositif de régulation comprenant trois poulies mobiles. En effet, dans la majorité des cas, l'utilisation de trois poulies mobiles permet d'approcher correctement les variations de débit du fil et donc de compenser correctement les différences de débit du fil entre la sortie de la bobine et la tête de dépose. Toutefois, pour certaines formes particulières de l'ébauche 14 du pneumatique, il peut être nécessaire d'utiliser un plus grand nombre de poulies mobiles pour augmenter la précision de la compensation. Dans ce cas, on ajoute au dispositif de régulation de nouvelles poulies mobiles, on calcule une série de Fourier d'ordre égal au nombre de poulies mobiles, et on règle chacune des poulies de la même manière que celle décrite ci-dessus.

Alors que le dispositif de régulation de l'invention vient d'être décrit pour compenser une vitesse de défilement d'un élément linéaire depuis une vitesse sensiblement constante vers une vitesse sensiblement variable, le dispositif peut également être utilisé dans le sens inverse, c'est-à-dire pour compenser une vitesse de défilement depuis une vitesse variable vers une vitesse sensiblement constante.

Enfin, l'invention a été décrite relativement au défilement d'un fil de nappe carcasse. L'invention s'applique également au cas où l'élément linéaire est une bande de matière, par exemple une bande de caoutchouc.

**Revendications**

1. Dispositif (20) de régulation d'un débit de défilement d'un élément linéaire (12) pour la fabrication d'un pneumatique, **caractérisé en ce qu'**il comprend des moyens (34) formant un trajet de défilement de l'élément linéaire (12) entre une entrée du dispositif à débit sensiblement constant et une sortie du dispositif à débit variable et sensiblement périodique, le trajet ayant une longueur variable selon une loi périodique prédéterminée, ces moyens (34) comprenant :

   - une pluralité de poulies (P) de renvoi de l'élément linéaire, chacune mobile en translation rectiligne selon une même direction,
   - des moyens (C, A, G, R) de déplacement des poulies (P) agencés pour les déplacer selon un mouvement de translation sinusoïdal de période multiple de la période du débit de sortie de l'élément linéaire, la période du mouvement d'au moins une poulie dite menante étant égale à la période du débit de sortie de l'élément linéaire,
   - des moyens de couplage des mouvements des poulies agencés de sorte que la fréquence du mouvement de chaque poulie est un multiple entier de la fréquence du mouvement de la poulie menante,
   - pour chaque poulie, des moyens de réglage de son amplitude de translation.

2. Dispositif (20) selon la revendication précédente, dans lequel le mouvement périodique de déplacement des poulies (P) est déterminé de manière à compenser les variations du débit de sortie du dispositif (20).

3. Dispositif (20) selon la revendication précédente, dans lequel les moyens de déplacement (C, A, G, R) de chaque poulie (P) comprennent :

   - un coulisseau (C) formant support de la poulie (P), mobile en translation,
   - un arbre (A) d'entraînement du coulisseau (C), et
   - des moyens (G, R) de couplage du coulisseau (C) avec l'arbre (A) transformant le- mouvement de rotation de l'arbre (A) en mouvement périodique de translation du coulisseau (C).

4. Dispositif (20) selon la revendication précédente, dans lequel les moyens (G, R) de couplage sont de type bielle/manivelle ou manivelle à coulisse.

5. Dispositif (20) selon la revendication précédente, dans lequel les moyens (G, R) de couplage étant du type manivelle à coulisse, ils comprennent :

   - un galet (G) d'entraînement formant manivelle, porté par l'une des extrémités de l'arbre (A) et déporté radialement d'un axe principal de l'arbre (A),
   - une rainure (R) formant coulisse ménagée dans le coulisseau (C) et orientée sensiblement orthogonalement à la direction de translation du coulisseau (C) et dans laquelle est engagé le galet (G),

   de sorte que lorsque l'arbre (A) tourne à vitesse constante, le déplacement du coulisseau (C) est sinusoïdal.

6. Dispositif (20) selon la revendication précédente, comprenant des moyens pour modifier le déport radial du galet (G) formant moyens de réglage de l'amplitude de translation de la poulie (P).

7. Dispositif (20) selon l'une quelconque des revendications précédentes, dans lequel les arbres d'entraînement respectifs (A1, A2, A3) des poulies sont couplés les uns avec les autres de sorte que l'arbre (A1) de la poulie menante (P1) est menant et les arbres des poulies sont couplés deux à deux par des moyens de démultiplication en se référant à l'arbre menant.

8. Dispositif (20) selon la revendication précédente, dans lequel les vitesses de rotation des arbres (A) sont distinctes les unes des autres et sont des multiples entiers de la vitesse de l'arbre menant.

9. Dispositif (20) selon la revendication 7 ou 8, dans lequel la période de rotation de l'arbre menant est sensiblement égale à la période du débit variable et sensiblement périodique.

**10.** Installation (10) de dépose radiale d'un élément linéaire (12) sur une ébauche (14) de pneumatique, **caractérisé en ce qu'**elle comprend un dispositif (20) de régulation selon l'une quelconque des revendications précédentes.

**11.** Installation (10) selon la revendication précédente, comprenant :

- une bobine (16) formant support d'enroulement pour l'élément linéaire (12),
- un organe (22) de dépose de l'élément linéaire (12) sur l'ébauche (14) au débit variable et sensiblement périodique, comprenant une tête (24) de dépose et des moyens (28, 30) de déplacement de la tête (24), des moyens pour dérouler l'élément linéaire (12) de la bobine (16) en le faisant défiler au débit sensiblement constant, et
- le dispositif (20) de régulation de débit, intercalé entre la bobine (16) et l'organe (22) de dépose.

**12.** Installation (10) selon la revendication précédente, comprenant des moyens (42) de couplage des moyens (28, 30) de déplacement de la tête (24) avec les moyens (34, P) pour faire varier la longueur du trajet de l'élément linéaire (12).

**13.** Installation (10) selon la revendication 10 ou 11, comprenant des moyens de couplage des moyens (28, 30) de déplacement de la tête (24) avec les moyens pour dérouler l'élément linéaire (12) de la bobine.

**14.** Procédé de réglage d'un dispositif (20) selon l'une quelconque des revendications 1 à 9, pour réguler le débit de défilement d'un élément linéaire défilant à un débit variable et sensiblement périodique, comprenant les étapes suivantes :

- décomposition en série de Fourier d'ordre n du débit de défilement périodique de l'élément linéaire, pour déterminer les coefficients de Fourier des n premières harmoniques,
- utilisation d'un dispositif (20) comprenant n poulies (P) de renvoi,
- réglage des amplitudes de translation des poulies de renvoi (P) de sorte que, pour une poulie dont la fréquence du mouvement est égale à m fois la fréquence du mouvement de la poulie menante, son amplitude de translation est réglée en fonction du m$^{iéme}$ coefficient de Fourier.

**Claims**

**1.** A device (20) for regulating the delivery rate of a linear element (12) for fabricating a tire, **characterized in that** it comprises path-forming means (34) forming a delivery path for the linear element (12) between an inlet to the device at substantially constant delivery rate and an outlet from the device at a rate that varies and that is substantially periodic, the path being of length that is variable in application of a predetermined periodic relationship, said path-forming means (34) comprising:

- a plurality of deflection pulleys (P) for deflecting the linear element, each pulley being movable in rectilinear translation in a common direction
- means (C, A, G, R) for moving the pulleys (P) and arranged to move them in sinusoidal translation motion of period that is a multiple of the period of the delivery rate of the linear element, the period of the motion of at least one pulley, referred to as a driving pulley, being equal to the period of the delivery rate of the linear element;
- means for coupling the movements of the pulleys, said means being arranged in such a manner that the motion frequency of each pulley is an integer multiple of the motion frequency of the drive pulley; and
- for each pulley, means for adjusting the amplitude of its movement in translation.

**2.** A device (20) according to the preceding claim, in which the periodic motion of the pulley (P) is determined so as to compensate for the variations in the delivery rate at the outlet from the device (20).

**3.** A device (20) according to the preceding claim, in which the means (C, A, G, R) for moving each pulley (P) comprise:

- a slide (C) forming a support for the pulley (P) and movable in translation;
- a drive shaft (A) for driving the slide (C), and
- coupling means (G, R) for coupling the slide (C) with the shaft (A) to transform the rotary motion of the shaft (A) into periodic motion in translation of the slide (C).

**4.** A device (20) according to the preceding claim, in which the coupling means (G, R) are of the crank and coupling rod type or the crank and guide slot type.

5. A device (20) according to the preceding claim, in which the coupling means (G, R) are of the crank and guide slot type and comprise:

- a crank-forming drive wheel (G) carried at one of the ends of the shaft (A) and radially offset from a main axis of the shaft (A), and
- a guide slot (R) formed in the slide (C) and extending substantially orthogonally to the direction in which the slide (C) moves in translation, and in which the wheel (G) is engaged;

in such a manner that when the shaft revolves at constant speed, the motion of the slide is sinusoidal.

6. A device (20) according to the preceding claim, including means for modifying the radical offset of the wheel (G) thereby forming means for adjusting the amplitude of the movement in translation of the pulley (P).

7. A device (20) according to any of the preceding claims, in which the respective drive shafts (A1, A2, A3) of the pulleys are coupled to one another so that the shaft (A1) of the drive pulley (P1) is a drive shaft and the shafts of the pulleys are coupled together in pairs by means for gearing down relative to the drive shaft.

8. A device (20) according to the preceding claim, in which the speeds of rotation of the shafts (A) are distinct from one another and are integer multiples of the speed of the drive shaft.

9. A device (20) according to claim 7 or 8, in which the period of rotation of the drive shaft is substantially equal to the period of the variable delivery rate that is substantially periodic.

10. An installation (10) for radially laying a linear element (12) on a tire blank (14), **characterized in that** the installation includes a regulator device (20) according to any of the preceding claims.

11. An installation (10) according to the preceding claim, comprising:

- a reel (16) forming a support on which the linear element is reeled,
- a member (22) for laying the linear element (12) on the blank (14) at a rate that is variable and substantially periodic, the member comprising a laying head (24) and means (28, 30) for moving the head (24),
- means for unreeling the linear element (12) from the reel (16) by causing it to move at a substantially constant delivery rate; and
- the delivery rate regulator device (20) interposed between the reel (16) and the laying member (22).

12. An installation (10) according to the preceding claim, including coupling means (42) for coupling the means (28, 30) including the head (24) with the means (34, P) for causing the length of the path of the linear (12) element to vary.

13. An installation (10) according to claim 10 or 11, including coupling means (28, 30) for coupling the means for moving the head (24) with the means for unreeling the linear element (12) from the reel.

14. A method of adjusting a device (20) according to any of claims 1 to 9, to adjust the delivery rate of a linear element traveling at a rate that is variable and substantially periodic, the method comprising the following steps:

- resolving the periodic delivery rate of the linear element into a Fourier series of order $\underline{n}$ in order to determine the Fourier coefficients of the first $\underline{n}$ harmonics,
- using a device (20) having n deflector pulleys (P); and
- adjusting the amplitudes of the movement in translation of the deflector pulleys (P) in such a manner that for a pulley having motion at a frequency equal to $\underline{m}$ times the frequency of the motion of the drive pulley, the amplitude of its movement in translation is set as a function of the $m^{th}$ Fourier coefficient.

**Patentansprüche**

1. Vorrichtung (20) zur Regelung eines Durchlaufdurchsatzes eines linearen Elements (12) zur Herstellung eines Luftreifens, **dadurch gekennzeichnet, dass** sie Einrichtungen (34) enthält, die eine Durchlaufstrecke des linearen Elements (12) zwischen einem Eingang der Vorrichtung mit im Wesentlichen konstantem Durchsatz und einem Ausgang der Vorrichtung mit variablem und im Wesentlichen periodischem Durchsatz formen, wobei die Strecke eine gemäß einem vorbestimmten periodischen Gesetz variable Länge hat, wobei diese Einrichtungen (34) enthalten:

- mehrere Umlenkscheiben (P) des linearen Elements, die jede in geradliniger Translation in gleicher Richtung beweglich sind,
- Einrichtungen (C, A, G, R) zur Verschiebung der Scheiben (P), die eingerichtet sind, um sie gemäß einer sinusförmigen Translationsbewegung mit einer Periode, die ein Vielfaches der Periode des Ausgangsdurchsatzes des linearen Elements ist, zu verschieben, wobei die Periode der Bewegung mindestens einer so genannten Treibscheibe gleich der Periode des Ausgangsdurchsatzes des linearen Elements ist,
- Einrichtungen zum Koppeln der Bewegungen der Scheiben, die so eingerichtet sind, das die Frequenz der Bewegung jeder Scheibe ein ganzes Vielfaches der Frequenz der Bewegung der Treibscheibe ist,
- für jede Scheibe Einrichtungen zur Einstellung ihrer Translationsamplitude.

2. Vorrichtung (20) nach dem vorhergehenden Anspruch, bei der die periodische Verschiebebewegung der Scheiben (P) so bestimmt wird, dass die Veränderungen des Ausgangsdurchsatzes der Vorrichtung (20) kompensiert werden.

3. Vorrichtung (20) nach dem vorhergehenden Anspruch, bei der die Verschiebeeinrichtungen (C, A, G, R) jeder Scheibe (P) enthalten:

- einen translationsbeweglichen Schieber (C), der einen Träger der Scheibe (P) bildet,
- eine Antriebswelle (A) des Schiebers (C), und
- Einrichtungen (G, R) zum Koppeln des Schiebers (C) mit der Welle (A), die die Drehbewegung der Welle (A) in eine periodische Translationsbewegung des Schiebers (C) umwandeln.

4. Vorrichtung (20) nach dem vorhergehenden Anspruch, bei der die Kopplungseinrichtungen (G, R) von der Art Schubkurbel oder Kurbel mit Kulisse sind.

5. Vorrichtung (20) nach dem vorhergehenden Anspruch, bei der die Kopplungseinrichtungen (G, R), wenn sie von der Art Kurbel mit Kulisse sind, enthalten:

- eine Antriebsrolle (G), die eine Kurbel bildet, getragen von einem der Enden der Welle (A) und radial zu einer Hauptachse der Welle (A) versetzt,
- eine eine Kulisse bildende Rille (R), die im Schieber (C) eingerichtet und im Wesentlichen orthogonal zur Translationsrichtung des Schiebers (C) ausgerichtet ist, und in die die Rolle (G) eingeführt ist,

so dass, wenn die Welle (A) mit konstanter Geschwindigkeit dreht, die Verschiebung des Schiebers (C) sinusförmig ist.

6. Vorrichtung (20) nach dem vorhergehenden Anspruch, die Einrichtungen zum Verändern des radialen Versatzes der Rolle (G) enthält, die die Einstelleinrichtungen der Translationsamplitude der Scheibe (P) bilden.

7. Vorrichtung (20) nach einem der vorhergehenden Ansprüche, bei der die jeweiligen Antriebswellen (A1, A2, A3) der Scheiben miteinander gekoppelt sind, so dass die Welle (A1) der Treibscheibe (P1) treibend ist und die Wellen der Scheiben durch Untersetzungseinrichtungen unter Bezug auf die Treibwelle paarweise gekoppelt sind.

8. Vorrichtung (20) nach dem vorhergehenden Anspruch, bei der die Drehgeschwindigkeiten der Wellen (A) sich voneinander unterscheiden und ganze Vielfache der Geschwindigkeit der Treibwelle sind.

9. Vorrichtung (20) nach Anspruch 7 oder 8, bei der die Drehperiode der Treibwelle im Wesentlichen gleich der Periode des variablen Durchsatzes und im Wesentlichen periodisch ist.

10. Anlage (10) zum radialen Aufbringen eines linearen Elements (12) auf einen Rohling (14) eines Luftreifens, **dadurch gekennzeichnet, dass** sie eine Regelungsvorrichtung (20) nach einem der vorhergehenden Ansprüche enthält.

11. Anlage (10) nach dem vorhergehenden Anspruch, die enthält:

- eine Spule (16), die einen Aufwickelträger für das lineare Element (12) bildet,
- ein Organ (22) zum Aufbringen des linearen Elements (12) auf den Rohling (14) mit variablem und im Wesentlichen periodischem Durchsatz, das einen Aufbringkopf (24) und Einrichtungen (28, 30) zur Verschiebung des Kopfes (24) enthält,
- Einrichtungen, um das lineare Element (12) von der Spule (16) abzuwickeln, indem es mit dem im Wesentlichen konstanten Durchsatz durchlaufen gelassen wird, und
- die Vorrichtung (20) zur Regelung des Durchsatzes, die zwischen der Spule (16) und dem Aufbringorgan (22) angeordnet ist.

12. Anlage (10) nach dem vorhergehenden Anspruch, die Einrichtungen (42) zur Kopplung der Verschiebeeinrichtungen (28, 30) des Kopfes (24) mit den Einrichtungen (34, P) zur Veränderung der Länge der Strecke des linearen Elements (12) enthält.

13. Anlage (10) nach Anspruch 10 oder 11, die Einrichtungen zur Kopplung der Verschiebeeinrichtungen (28, 30) des Kopfes (24) mit den Einrichtungen zum Abwickeln des linearen Elements (12) von der Spule enthält.

14. Verfahren zur Einstellung einer Vorrichtung (20) nach einem der Ansprüche 1 bis 9, um den Durchlaufdurchsatz eines linearen Elements zu regeln, das mit einem variablen und im Wesentlichen periodischen Durchsatz durchläuft, das die folgenden Schritte enthält:

- Zerlegung in eine Fourier-Reihe der Ordnung n des periodischen Durchlaufdurchsatzes des linearen Elements, um die Fourier-Koeffizienten der n ersten Harmonischen zu bestimmen,
- Verwendung einer Vorrichtung (20), die n Umlenkscheiben (P) enthält,
- Einstellung der Translationsamplituden der Umlenkscheiben (P) derart, dass für eine Scheibe, deren Bewegungsfrequenz gleich m Mal die Bewegungsfrequenz der Treibscheibe ist, ihre Translationsamplitude in Abhängigkeit vom m-ten Fourier-Koeffizienten eingestellt wird.

**Fig. 1**

**Fig. 2**

**Fig. 3a**

**Fig. 3b**

**Fig. 4**

Fig. 5

Fig. 6

EP 2 067 727 B1

Fig. 7

Fig. 8

Fig. 9

15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 11198247 B